# EUROPEAN PATENT SPECIFICATION

(11) **EP 2 009 596 B1**
(45) Date of publication and mention of the grant of the patent: **26.05.2010**
(21) Application number: 08010294.0
(22) Date of filing: 05.06.2008
(51) Int. Cl.: G07C 9/00, G06F 21/00, G06K 9/00

(54) **Biometric authentication system**
Biometrisches Authentifizierungssystem
Système d'authentification biométrique

(30) Priority: 29.06.2007 JP 2007171375
(43) Date of publication of application: 31.12.2008
(73) Proprietor: Hitachi-Omron Terminal Solutions, Corp., Shinagawa-ku Tokyo 141-0032 (JP)
(72) Inventor: Fujioka, Toshinori, Tokyo 100-8220 (JP)
(74) Representative: Strehl Schübel-Hopf & Partner

(56) References cited:
- EP-A- 1 162 577
- EP-A- 1 394 657
- EP-A- 1 783 650
- US-A- 5 987 155
- US-A1- 2002 180 586
- US-A1- 2004 148 526
- US-A1- 2006 117 188
- US-A1- 2007 016 088
- US-B1- 6 957 337

## Description

### BACKGROUND OF THE INVENTION

### Field of the Invention

The present invention relates to a biometric authentication system with a biometric authentication function that verifies the identity of a customer by reading his or her biometric information.

### Description of the Related Art

In transactions between financial institutions and their customers, the financial institutions initiate transactions after authenticating the identity of a customer. For example, in a transaction using an automated teller machine (ATM), a cash card and a password are used to verify the identity of the customer. As damages caused by the use of stolen cards and forged cards in transactions with financial institutions are growing in recent years, there are increasing calls for improved security, particularly with ATM transactions.

As one method for improving the security, a biometric authentication system has begun to be applied also to ATM transactions, which verifies the identity of a customer by registering biometric information of the customer in advance, such as images of finger prints, irises and finger veins, with an IC chip of a card that the institution has issued and checking authentication data based on biometric information scanned during transaction against registered data based on biological information registered in advance.

Biometric information differs among different individuals and thus is used by biometric authentication systems but the information on human body is susceptible to influences of surrounding environments, such as physical conditions of a customer, ambient temperatures and external light. Further, as to the placement of a subject human body part to be measured on a scanning device, it is not possible to define directions - up, down, left or right - precisely and uniquely, so biometric information is also influenced by how the human body part being measured is placed.

Under these circumstances, in biometric authentication devices using biometric information, if it is not confirmed that authentication data matches registered data or if a sufficient quantity of characterization fails to be obtained from scanned biometric information, conventional practice is to deny the customer the acceptance of transaction because of a failure of identity verification based on biometric authentication. If a version of software for scanning and characteristics extraction processing is updated to improve an image quality of scanned biometric information and also characteristics extraction, registered data that has already been registered in a conventional method can no longer be used, requiring customers to re-register their biometric information with the updated version of software, wasting large amounts of labor, cost and time. To solve this problem, JP-A-2001-84371 obviates the need to re-register customers' biometric information by converting either the registered data or authentication data according to the scanning condition of one of the two types of data.

To reduce the number of transaction denials during scanning of biometric information, JP-A-2002-297550 analyses a cause of failure of biometric authentication and then has the biometric authentication device give advice to a customer for better placement of biometric information and scan the biometric information again. Further, JP-A-2006-99374 accumulates the authentication results, i.e., the number of successful authentications (OK) and authentication failures (NG) for a customer whose authentication failures are sporadically observed, and, if a frequency of NG in a predetermined period is high, informs the customer that re-registration is required and re-registers biometric data of the customer.

Conventional biometric authentication devices use the same sampling areas for biometric information to be authenticated (registered) in both a registration process and an authentication process, the same data sizes and same data quantities for both registration data and authentication data, and performs the same scanned image quality evaluation and same characteristics extraction processing in both the registration process and the authentication process.

The only difference between the registration process and the authentication process lies in the fact that only the registration process writes registered data into an IC chip after characteristics extraction is performed and that only the authentication process compares, after characteristics extraction, the registration data and the authentication data scanned during the authentication process and determines whether the authentication is successful or failed, depending on whether a resultant similarity of these data exceeds a predetermined threshold value. As described above, auxiliary or additional processing for improving scanned image quality is not performed during authentication process, with the result that a rate of successful authentication has not been improved sufficiently.

Further, information for individual customers includes only the recorded number of authentication failures. The numbers of authentication failures by causes are only accumulated and recorded by an ATM and a biometric authentication device for the entire customers, not for individual customers. Hence, a mechanism to ensure that customers can become aware of an error-prone placement of subject body part has not been built satisfactorily.

In a device employing the biometric authentication technology of JP-A-2001-84371, data conversion involves converting biometric information into one that conforms to whichever of registration data and authentication data is generated by an older version of software before executing an authentication process. Therefore, this may not lead to an improvement in the authentication success rate until the biometric information is re-registered by a new version of software.

In a device employing the biometric authentication technology of JP-A-2002-297550, if there is a problem with a biometric information image, image processing to improve a quality of scanned image, which is not performed during registration, is not executed but the most likely or pertinent advice is selected for an authentication failure from among improvement measures analyzed and devised in an associated category of failure causes accumulated in advance and then presented to a customer as guidance. As a result, if there is no problem with the customer and the problem lies with a quality of the scanned image, an appropriate advice cannot be given or the advice presented is irrelevant, or the number of transaction denials during scan may not be reduced enough.

A device employing the biometric authentication technology of JP-A-2006-99374 has a customer, who experiences frequent authentication failures (NG) during the scan of biometric information, re-register his/her biometric information because of the fact that the NG frequency is high. This device, however, neither analyze the NG's for their cause nor present NG causes or their analysis results to the customer for him/her to make improvements.

US 2006/0117188 A1 discloses a biometric authentication system in accordance with the first part of claim 1. In that system, if a biometric print does not have a high enough quality, the print is discarded. In order to recuce the false reject rate, measures are taken to improve the average image quality on subsequent authorizations of the same user.

### SUMMARY OF THE INVENTION

The present invention has been accomplished with a view to overcoming the above problems and its object is to provide a biometric authentication system that offers user's convenience and a high level of security by improving a rate of authentication success while maintaining a high level of biometric authentication accuracy.

To achieve the above objective, the present invention performs as follows. If a quality of scanned image of biometric information obtained in an authentication process fails to meet a qualitative evaluation that has been performed quantitatively, image processing that is not performed during the registration process and which improves the quality of scanned image is executed during the authentication process, thus making the biometric authentication successful to allow transactions to be initiated.

If processing to improve the quality of scanned image is to be added, it is successively added to the authentication process irrespective of the registration process. Upgrading the version of only the authentication process can not only obviate the need for re-registration of biometric information that would otherwise be required by the version-up of the processing but also allow for changes intended to enhance the rate of successful authentication irrespective of the version of the registration process.

Further, when registration data is registered, biometric information is scanned and registered by increasing margins of error in the placement of a subject human body part. For example, a subject sampling area scanned during the registration process is set larger than that for the authentication process, so that if a subject human body part should be placed on the authentication device somewhat deviated or inclined from an intended position in a vertical or horizontal direction, the authentication data can still be encompassed in the registration data to allow for checking for their match.

Further, in addition to being used as a single entire screen, the subject sampling area may also be divided in vertical and horizontal directions into smaller sub-areas, in each of which characteristics are extracted and registered. At each retry following an authentication failure, check results in the divided sub-areas are examined. If the entire area successfully matches the registered data (OK) under an OR condition, an overall authentication result is made OK. Since the check results of the divided sub-areas show which sub-area of the subject sampling area is NG, an NG cause that remains unclear in the entire sampling area can be analyzed more accurately, making it possible to give the user an appropriate guidance on the placement of the subject human body part for better eliminating the NG cause.

Further, the number of times that a failure occurs is accumulated and recorded in each category of NG causes for individual customers. Based on the recorded data, a guidance for better placement of a subject human body part is given to individual customers so that they can check for and be aware of a tendency of causes of authentication failures (NG's) the customers are prone to make at time of biometric information reading during the biometric authentication process.

This invention allows changes to be made to enhance the authentication success rate by successively upgrading the version of only the authentication process. When he fails an authentication, a customer can be made aware of the undesirable way he is apt to put his subject body part and thus can deepen his understanding of how the biometric information reading and image quality can be improved. In subsequent transactions, the customer can make improvements on the way he puts his subject body part during the authentication process, increasing the reliability of the biometric authentication system. This in turn secures stable operation of the device and also provides a biometric authentication system with a high rate of successful authentication.

### BRIEF DESCRIPTION OF THE DRAWINGS

Fig. 1 is an example block diagram of ATM 101 in an embodiment of this invention.
Fig. 2 is a configuration diagram of a biometric authentication system including the ATM 101.
Fig. 3 illustrates one example of the biometric authentication system.
Fig. 4 is a block diagram of an example of an IC chip 301.
Fig. 5 is a flow chart for registering biometric information.
Fig. 6 is an example screen on a display 103 that gives guidance on how to set a finger to be registered.
Fig. 7 illustrates an example image of biometric information scanned by a finger vein reader 102.
Figs. 8A and 8B are flow charts for authenticating biometric information.
Fig. 9 is an example of version number management table for software used for biometric information.
Figs. 10A to 10E illustrate example scan areas for reading biometric information.
Figs. 11A and 11B are cross-sectional views of the finger vein reader.
Figs. 12A and 12B illustrate a relation between registration data and authentication data of biometric information.
Figs. 13A and 13B are flow charts for authenticating biometric information by the ATM 101.
Fig. 14 illustrates an example table for managing biometric information check results.
Figs. 15A to 15D are example screens on the display 103 showing improved ways of putting a finger on the reader.
Fig. 16 shows an example configuration of biometric information stored in the IC chip 301.
Fig. 17 shows an example screen on the display 103 showing an authentication failure message.
Fig. 18 shows an example screen on the display 103 showing possible causes of the authentication failure.

### DESCRIPTION OF THE EMBODIMENT

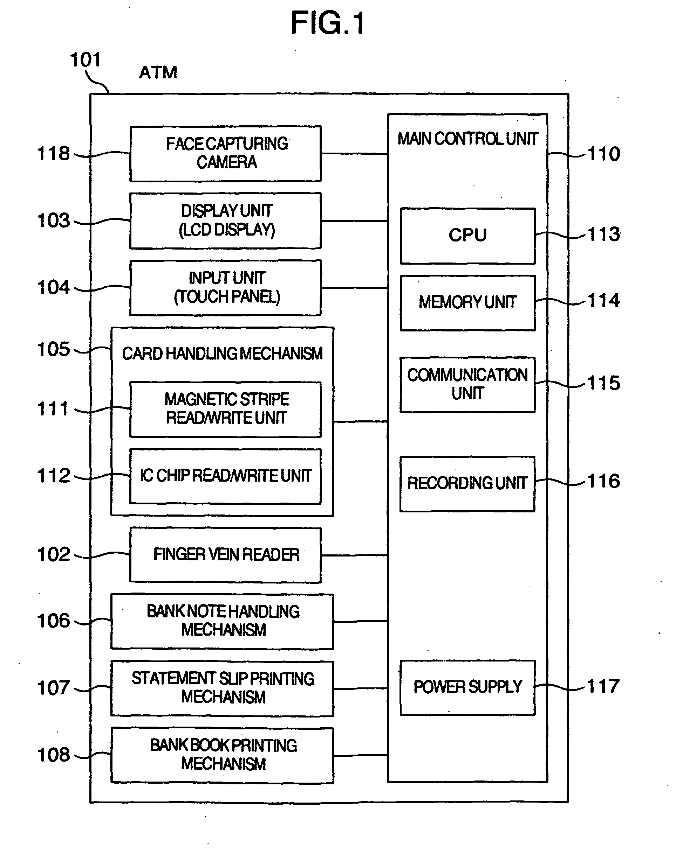

First, referring to Fig. 1 to Fig. 5, a basic configuration of this embodiment will be described. In this embodiment finger vein information is used as biometric information.

Fig. 1 is a block diagram of an automated teller machine (hereinafter referred to as an ATM) according to one embodiment of this invention. The ATM 101 comprises a finger vein reader 102 that scans a finger vein image (biometric image) from a finger of a customer; a liquid crystal display 103 used as a display unit to show a transaction guidance to a customer; a touch panel 104 used as an input unit for entering transaction operation; a card handling mechanism 105 to process a cash card inserted; a bank note handling mechanism 106 to take in or dispense bills; a statement slip printing mechanism 107 to print a statement slip; a bankbook printing mechanism 108 to print a bankbook; and a main control unit 110 to control an operation of the ATM 101 as a whole.

The card handling mechanism 105 has a magnetic stripe read/write unit 111 to read from or write into the IC card inserted by a customer and an IC chip read/write unit 112 to read from or write into the IC chip. The main control unit 110 includes a CPU 113 to control various processing, a memory unit 114 in which to store programs to execute various processing and transaction information, a communication unit 115 to transfer data to and from a host and a server, a recording unit 116 to successively record information on transactions with a customer, and a power supply 117.

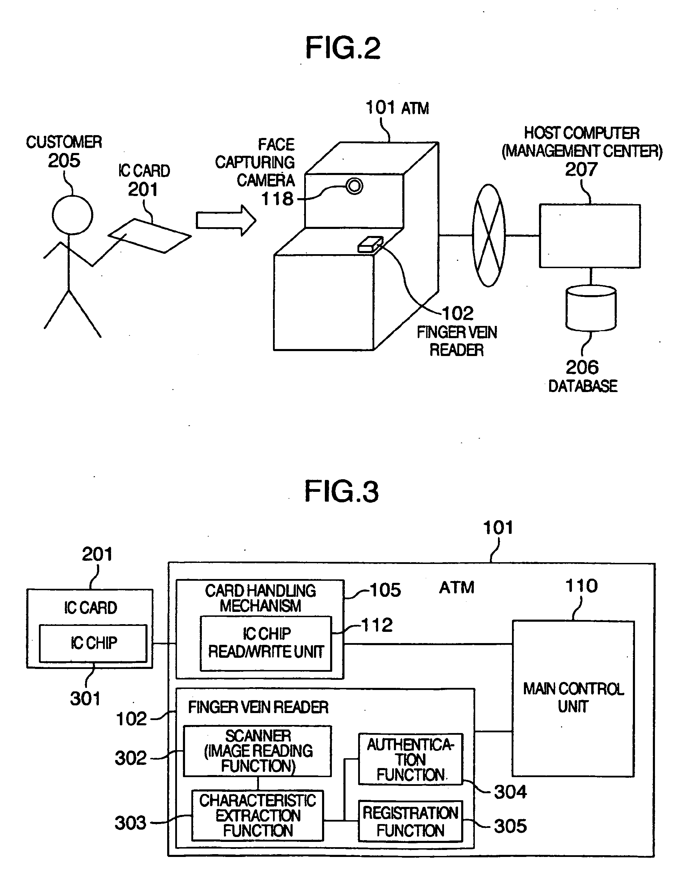

Fig. 2 shows an external view of the ATM 101 and also a configuration diagram of the biometric authentication system including the ATM 101 in a financial institution. At an upper front of the ATM 101 is installed a face capturing camera 118 which takes a photograph of a face of a customer 205 holding an IC card 201. At the right side of the customer operation desk is installed a finger vein reader 102. The ATM 101 is connected to a host computer 207 via network. The host computer 207 includes a database 206 storing customer's account data.

Fig. 3 is a block diagram showing one example of the biometric authentication system, in which the IC chip 301 of the IC card 201 that the customer 205 has inserted into the card handling mechanism 105 communicates with the IC chip read/write unit 112 through a contact provided on the surface of the IC chip. During the authentication process, when the customer 205 puts his/her finger on the finger vein reader 102, a finger vein image is read and its quality evaluated by a scanner 302. Then a characteristic extraction function 303 extracts characteristics from the finger vein image to generate authentication data. The authentication data is then sent from an authentication function 304 through the main control unit 110 and IC chip read/write unit 112 to the IC chip 301 for execution of the authentication process. A registration function 305 of the finger vein reader 102 is used when registration data is written into the IC chip 301 as a registration unit.

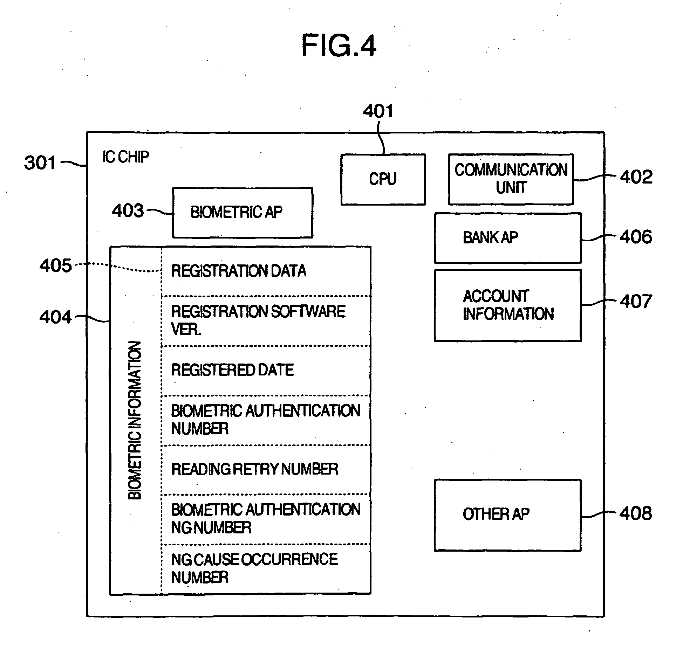

Fig. 4 is a block diagram showing an example of the IC chip 301 of the IC card 201. A CPU 401 controls the entire IC chip 301, and a communication unit 402 is used to communicate with the IC chip read/write unit 112. A biometric AP (application program) 403 executes registration of registration data into a registration data area 405 in the biometric information area 404 and is also in charge of a part of the biometric authentication process that checks the authentication data read from a customer during the authentication process against the registration data. A bank AP (application program) 406 reads account information from an account information area 407. The IC chip 301 may incorporate other APs 408 for processing credits for individual financial institutions.

Now, an example processing using the above configuration will be explained in detail.

### [Embodiment 1]

### (1) Registration Process

To initiate transactions by the biometric authentication process, a customer 205 is required to apply to a financial institution for registration of his/her biometric information. There are two cases of registration of biometric information - registering biometric information of a customer 205 with a server of a financial institution and registering biometric information with a portable electronic media, such as IC card 201, carried by the customer 205. In the following, the case of registering biometric information with the IC card 201 of a portable electronic media of the customer will be explained.

A financial institution writes a financial institution number of a cash card, branch number and customer's account number into a magnetic strip or IC chip 301 as customer account information 407, issues an IC card 201 and mails it to the customer 205. The customer 205 visits the financial institution carrying the received IC card 201. There are two ways for registering biometric information with the financial institution.

One method involves operating a biometric information registration device by manipulations and directions of a staff to let the biometric information registration device read a finger vein image, extract characteristics of the finger vein image, generate registration data and register the registration data in the registration data area 405 of the IC chip 301 of the IC card 201 carried by the customer 205.

Another method has the customer 205 himself operate the ATM 101 according to its guidance to let the finger vein reader 102 built into it read a finger vein image, extract characteristics of the finger vein image, generate registration data and register the registration data in the registration data area 405 of the IC chip 301 of the IC card 201 held by the customer 205.

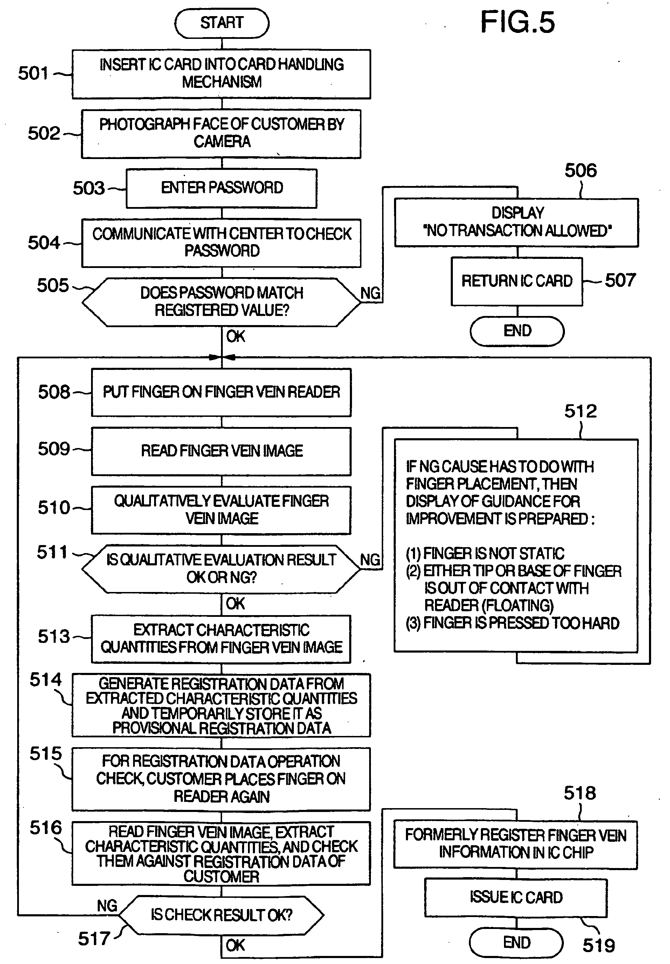

Fig. 5 shows a flow of processing performed when the customer 205 himself uses the ATM 101 in registering his biometric information.

First, when the customer 205 inserts an IC card 201 into the card handling mechanism 105 of the ATM 101 (step 501), the magnetic stripe read/write unit 111 reads account information recorded in the magnetic stripe, followed by the IC chip read/write unit 112 reading the account information 407 recorded in the IC chip 301. When it is detected that the IC card 201 is inserted into the card handling mechanism 105, the face capturing camera 118 photographs a face of the customer 205 (step 502).

Next, to verify the identity of the customer 205 holding the IC card 201, a password input screen is shown on the display 103 to prompt the customer 205 to enter his/her password (step 503).

When the customer 205 enters his password from the input unit 104, the ATM 101 transmits the entered password to a host computer 207 in a management center, which checks if the password matches one already registered (step 504). If the ATM 101 finds, from a check result it receives from the host computer 207 (step 505), that the password does not match, the ATM 101 shows a message reading "transaction is rejected" on the display 103 (step 506) and returns the IC card 201 to the customer 205 (step 507).

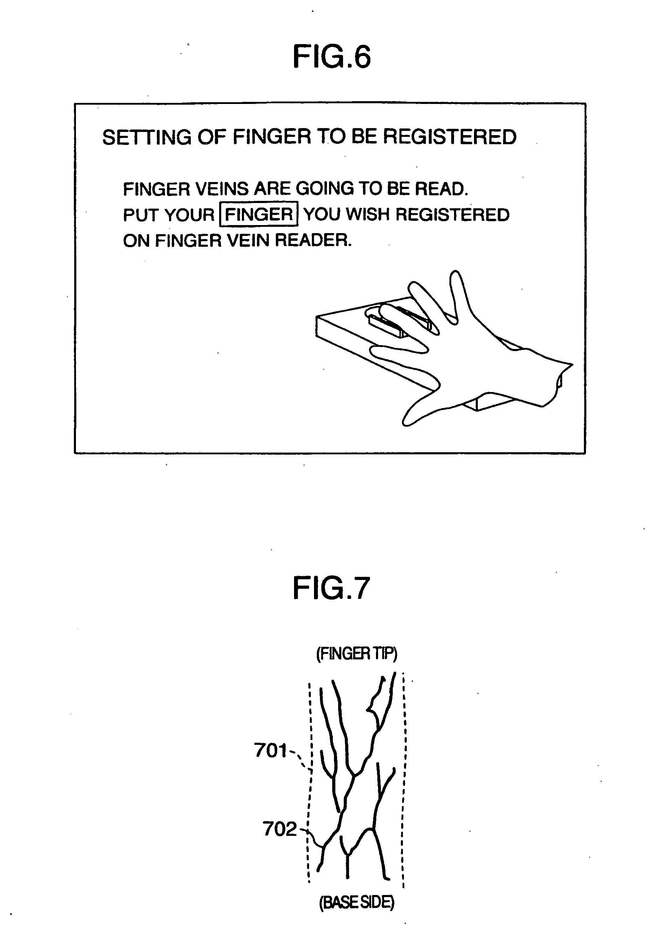

If the check result received at step 505 finds that "password matches", the ATM 101 decides that the customer 205 is an authorized user of the card and shows a guidance screen of Fig. 6 on the display 103 to prompt the customer to put his finger he wants to register on the finger vein reader 102 (step 508). When, according to the guidance screen, a finger of the customer 205 is placed on the finger vein reader 102, the finger vein reader 102 scans a vein image of the finger (step 509). Fig. 7 shows one example of vein image 702 of a finger 701 scanned by the finger vein reader 102 at step 509.

The finger vein reader 102 performs a quality evaluation quantitatively on the finger vein image 702 scanned in step 509 for evaluation items, such as stability of the finger vein image 702, fuzziness/sharpness in an entire image area and thickness/continuity of veins. Evaluation results are either given an OK or NG decision (step 510).

The ATM 101 checks the quality evaluation result (step 511) and, if the quality evaluation result is NG, displays a guidance, associated with the NG cause, for improving the way the finger 701 is placed (step 512) as by instructing the user to "release your finger from the reader." When the finger is removed, the process returns to step 508 and prompts the customer 205 to put his finger 701 in the reader again. If the quality evaluation result at step 511 is OK, the ATM 101 extracts characteristic quantities from the scanned finger vein image 702 (step 513), generates registration data from the extracted characteristic quantities and temporarily stores it as provisional registration data in a memory unit in the finger vein reader 102 (step 514).

To check if the provisional registration data can be used normally during an authentication process, the display 103 shows a guidance prompting the user to put his provisionally registered finger 701 again in the finger vein reader 102 (step 515).

The finger vein reader 102 again reads a finger vein image 702 of the finger 701, extracts characteristic quantities and checks them against the provisional registration data temporarily stored in the memory unit of the finger vein reader 102 (step 516).

The ATM 101 refers to the check result of step 516 (step 517) and, if the check result is found to be NG, returns to step 508 for re-execution of the registration process.

If the check result is found to be OK, the ATM 101 writes the provisional registration data temporarily stored in the memory unit of the finger vein reader 102 into the IC chip 301 for formal registration (step 518), and then issues an IC card 201 with biometric information registered (step 519). More specifically, the card handling mechanism 105 discharges the biometric information-registered IC card 201.

### (2) Authentication Process

### (A) Process Flow

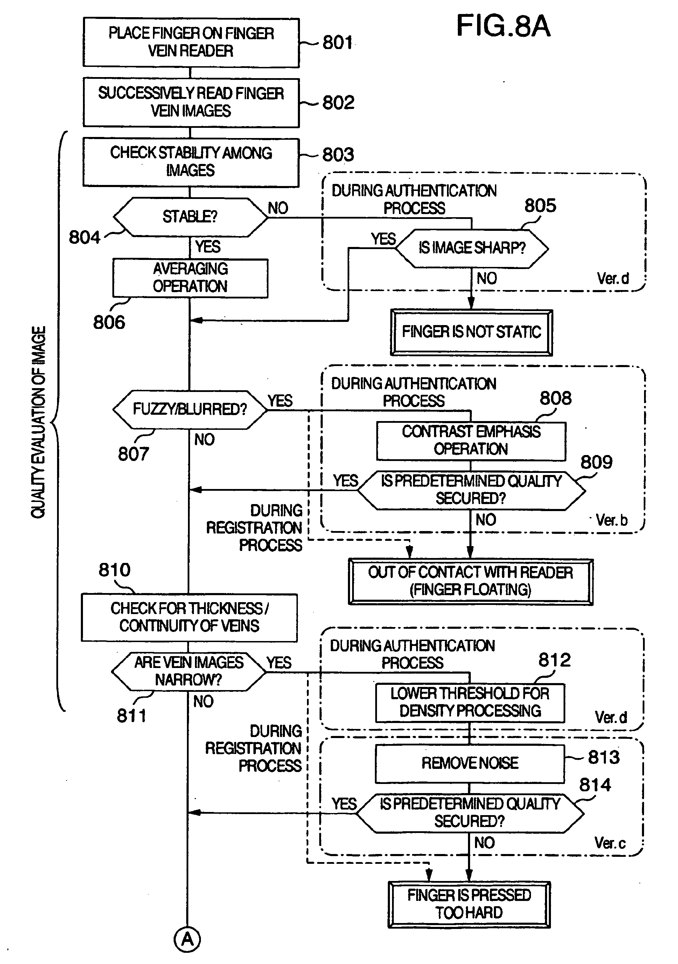

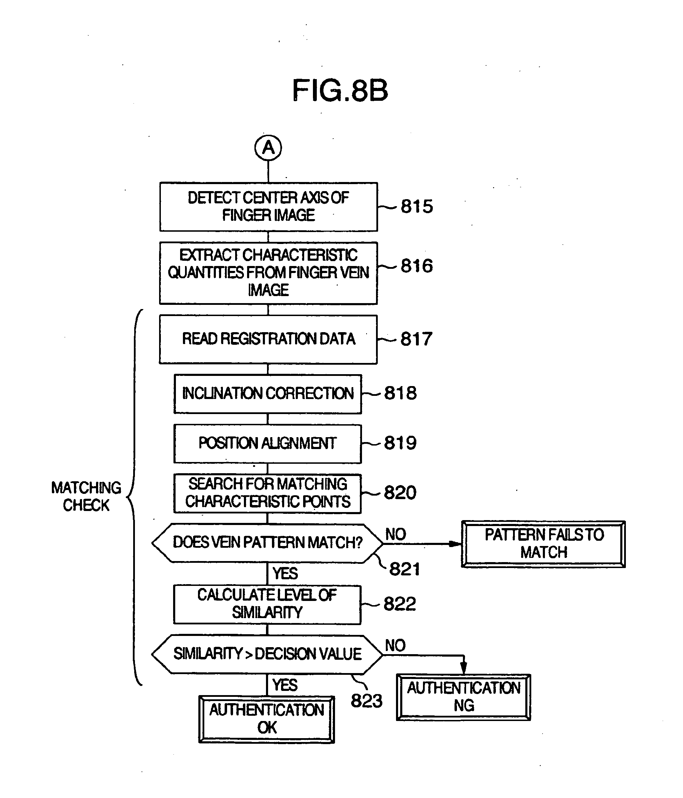

Next, a flow of an authentication process will be explained. Figs. 8A and 8B show details of a process flow when a customer 205 performs a biometric authentication in the ATM 101 by using a registered IC card 201.

The ATM 101 shows an instruction on the display 103, prompting the customer to put his registered finger 701 in the finger vein reader 102. When the customer 205 puts his finger 701 in the finger vein reader 102 as instructed (step 801), the finger vein reader 102 reads a finger vein image 702 of the finger 701 a plurality of times successively (step 802). Then, stability of the read finger vein images is checked by overlapping them. A fact that a moving finger will result in deviations among the finger vein images is used in making a stability decision.

For example, a distance between a characteristic point, such as a light or dark point, in the consecutively taken photographs and their end point is determined (step 803). If the finger is static, the distance remains constant. However, if it is moving, the distance varies. Checking if this distance is constant among the consecutively taken photographs can determine the stability (step 804).

If the stability among the plurality of finger vein images is not good, an image quality improvement operation is performed. The quality improvement operation is not performed during the registration process and is designed to check whether individual finger vein images are clear and sharp. For example, if imaged light and dark parts on scan lines form sharp ridges and troughs, the image is decided as being clear; and if they are broad, the image is decided as unclear or fuzzy.

According to the decision made, the most clear of the finger vein images taken is chosen (step 805). If the most clear finger vein image fails to exceed a predetermined level of clarity or sharpness, it is decided that "the finger is not static."

If step 804 decides that the finger vein images are stable, an averaging operation is performed among the plurality of the finger vein images (step 806) to reduce noise. If on the other hand step 804 finds that the finger vein images are unstable because a fuzziness is revealed by the overlapping of the consecutively taken pictures, the averaging operation among the finger vein images (step 806) is skipped, provided that the most clear finger vein image chosen by step 805 is sufficiently sharp.

Next, a check is made for fuzziness/unclearness in the entire area of image (step 807). For example, if imaged light and dark parts on scan lines form sharp ridges and troughs, the image is decided as being clear; and if they are broad, the image is decided as unclear or fuzzy. As a result, if there is fuzziness/unclearness in the image, a contract emphasizing operation is performed (step 808). Then a check is made as to whether the ridge-trough image (lightness-darkness distinctiveness) on the scan lines of the finger vein image 702 has reached an allowable sharpness, i.e., a half-value width of sharpness is narrowed down to an allowable value, in order to determine if a desired level of quality has been secured (step 809). In this case also, the quality improvement operation at these steps 808-809 is not performed during the registration process. If a predetermined quality cannot be secured, it is decided that "either the tip or base of the finger is not in contact with the finger vein reader (finger is floating) .

An imaging device is focused at a position where the finger is laid straight. Thus, when the tip and base of the finger are both in contact with the finger placement device, the finger is not easily moved producing stable, sharp finger vein images. However, if only one of the tip or base of the finger is in contact with the device, the finger vein images are almost clear but unstable because of the finger's floating motion.

When neither the tip nor the base of the finger is in contact with the device, instability of the finger results in unstable, unsharp finger vein images. If performed in this unstable condition, the contrast emphasizing operation produces little effect.

When an image quality can be secured, a check is made on a thickness/continuity of veins (step 810). Blood vessels are continuous, with thick veins as a trunk fanning out into finer veins. It may be unavoidable for narrow veins to appear interrupted in images to some extent but those with some thickness are characterized by their being continuous in images over a certain length. With these criteria in consideration a vein thickness/continuity check is made to see if the finger veins in the image 702 decrease in thickness or disappear partway (step 811).

It is when a scanned image is bright as a whole that imaged veins appear narrow. In such a case, for example, slightly lowering a threshold for binarization of multi-valued 256-bit data can recover the thickness of the imaged veins or connect interrupted veins so that they can be recognized as veins, thus improving an authentication success rate. Then, if imaged veins appear narrow or interrupted, an operation of lowering a threshold for image density change processing that is normally not performed during the registration process is executed, as in the above case (step 812).

Further, when pixels are lost or unwanted trash pixels are formed by noise, a noise elimination operation is performed by repeating addition and subtraction with adjoining pixels to fill in gaps of lost pixels and remove unwanted trash pixels to make veins appear to be continuous and connected (step 813). And then a check is made as whether a predetermined level of quality is secured (step 814).

If a predetermined level of quality is not secured, the imaged veins are considered to have appeared narrow or lost because the finger is pressed so hard against the reading device that blood in the veins cannot easily flow, reducing the blood flow, resulting in narrow or lost veins in the image. It is therefore determined that the "finger is pressed too hard" against the finger vein reader.

Performing the image quality improvement operation such as described in the above steps 805, 808, 812 and 813 to recover a satisfactory quality of the scanned finger vein image 702 and make the biometric authentication successful, thereby allowing the customer 205 to initiate transactions, is what the quality evaluation of the finger vein image 702 is designed to achieve during the authentication process.

The image quality improvement operation such as described in the steps 805, 808, 812 and 813 is not limited to what is explained here and may be otherwise. The order and combination of image quality improvement operations may preferably be arranged in consideration of a relation with other operations and of purposes.

If a predetermined level of quality is obtained in step 809 or step 814, a center axis is detected in the finger vein image 702 (step 815) and then characteristic quantities are extracted (step 816).

Next, a matching check is initiated to read out registration data from the registration data area 405 in the IC chip 301 (step 817), compare the center axis of the registration data with the center axis of the finger vein image 702 detected at step 815 and correct an inclination of the finger vein image 702 so that the center axes match (step 818). Also for data of divided sub-areas described later, inclination corrections are made by the matching of center axes of the entire data so that the upper right, upper left, lower right and lower left are corrected using the same inclination correction values.

By moving the finger vein image 702 horizontally and vertically, the image is matched in position to the registered data (step 819) to search matching characteristic points (step 820). Whether the finger vein image 702 and the registration data agree is checked by a pattern matching (step 821). If they do not match, it is decided that "finger vein patterns do not match." If they agree, a similarity level is calculated (step 822) and a check is made as to whether the similarity is in excess of an authentication decision value (step 823). If the similarity is lower than the decision value, the authentication is determined as "failure "; and if it is higher than the decision value, the authentication is determined as "successful."

### (B) Upgrading of Version of Image Quality Improvement Operation in Authentication Process

This invention is characterized in that the host computer 207 sends the image quality improvement operation of the authentication process to the biometric authentication system so that the biometric authentication system is allowed to upgrade the version of only the authentication process. This obviates the need for re-registration of the biometric information that would otherwise be required by the upgrading of the process and also allows modifications to be made to enhance the authentication success rate irrespective of the version of the registration process.

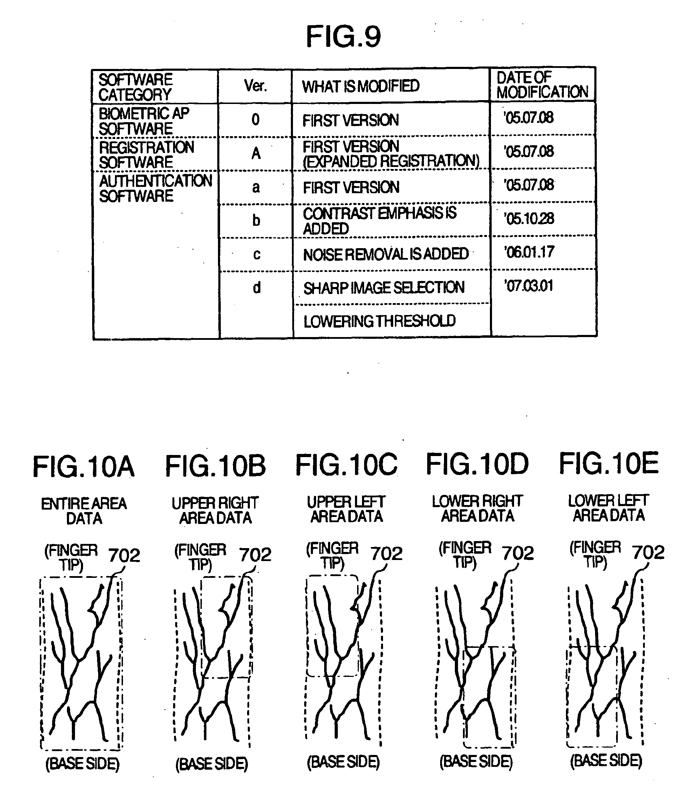

As one example, Fig. 9 shows a management table of version numbers (modification points) of software used in the biometric authentication process. In Fig. 9, biometric AP stored in the IC chip 301 is shown to have undergone no modifications after the issuance of its first version Ver. 0; and registration process software is also shown to have undergone no modifications after registration data of expanded size was issued in the initial version of Ver. A. Authentication process software is shown to have a contrast emphasizing operation for improving image quality added as Ver. b of Figs. 8A and 8B on 10/28/05 to the initial version Ver. a, a noise elimination operation added as Ver. c on 01/17/06 and a sharp image selection as well as a reviewing and lowering of a threshold of a density change operation added as Ver. d on 03/01/07.

### (Embodiment 2)

### (1) Methods of Registration Process and Authentication Process

Figs. 10A-10E show characteristics extracted not just from an entire biometric information scan area for the finger vein image 702 of the finger 701 scanned during registration but also from vertically and horizontally divided areas, these characteristics being registered as registration data. Fig. 10A represents data in the entire area, Fig. 10B data in the upper right area, Fig. 10C data in the upper left area, Fig. 10D data in the lower right area, and Fig. 10E data in the lower left area. Although Fig. 10B to Fig. 10E have the area divided into four sub-areas, the area may also be divided into two vertical or horizontal sub-areas or into three vertical sub-areas. Further, while Fig. 10B to Fig. 10E have divided areas overlap each other, they may be divided non-overlappingly.

In the adjustment of inclination of the image center axis, the entire area data and the divided area data are combined as one set. A center axis inclination difference between the registration data and the authentication data is adjusted by the entire area data and, by taking advantage of the fact that the divided area data is equal in inclination to the entire area data, the divided area data is corrected.

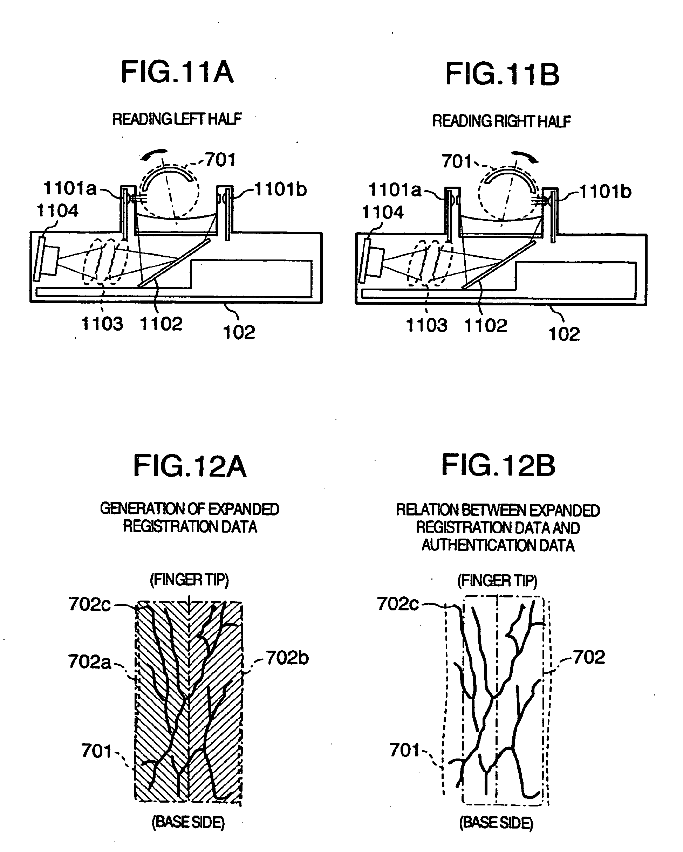

Fig. 11 and Fig. 12 show a method of registration that sets the biometric information scan area used during the registration process larger than the biometric information scan area used during the authentication process. Fig. 11 is a cross-sectional view of the finger vein reader 102. The finger vein image 702 of a finger 701 illuminated by left and right LEDs 1101a and 1101b is reflected by a mirror 1102 to pass through a lens 1103 to form an image on a CCD (secondary imaging device) 1104. Fig. 11A represents a case where a left half 702a of the finger vein image 702 of the finger 701 is read. The finger 701 is placed straight on the finger vein reader 102 and is slightly rolled toward the left side, with only the left LED 1101a turned on, to read the left-half vein image 702a. Next, Fig. 11B represents a case where a right half 702b of the finger vein image 702 of the finger 701 is read. The finger 701 is rolled back to the original straight position on the finger vein reader 102 and slightly rotated toward the right side, with only the right LED 1101b turned on, to read the right-half vein image 702b.

Fig. 12A shows an expanded vein image 702c that is formed by putting together the left half 702a of the finger vein image 702 read in Fig. 11A and the right half 702b of the finger vein image 702 read in Fig. 11B. The vein image (for registration) 702c is slightly expanded to left and right, when compared with the vein image (for authentication) 702 of Fig. 7 that is taken with the finger 701 put straight. Using the expanded vein image 702c as the registration data enables the authentication data 702, even if the finger 701 placed on the finger vein reader 102 should be slightly rolled toward right during the authentication process, to be encompassed by the expanded registration data 702c. This ensures that a matching check can still be made in such a situation.

### (2) Overall Flow

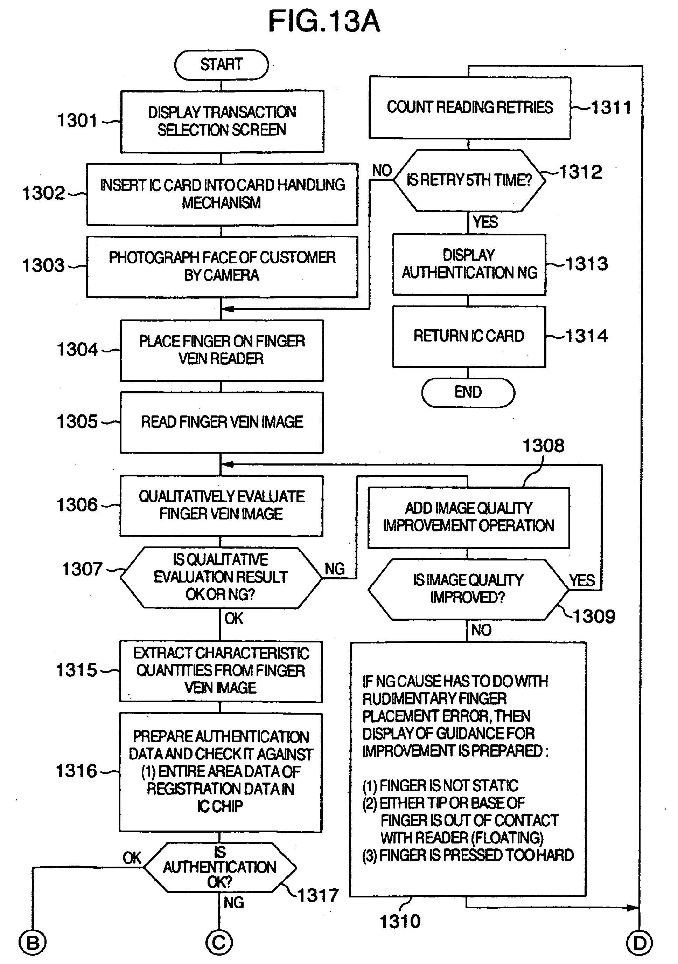

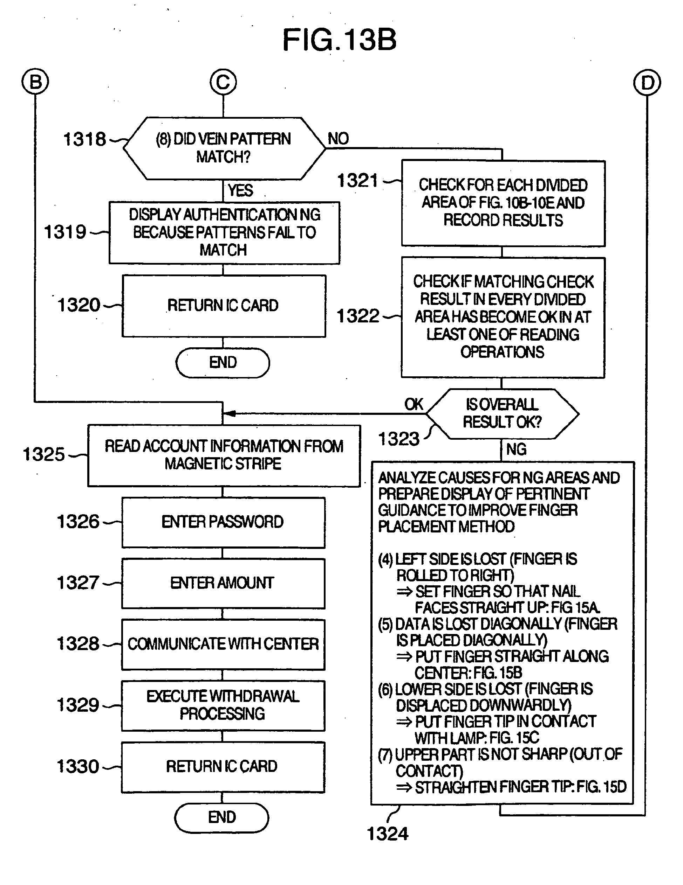

Figs. 13A and 13B show a flow of processing when a customer 205 performs an authentication process on biometric information in an ATM 101 before initiating transactions.

First, as the customer 205 approaches the ATM 101, the ATM 101 detects the approaching customer 205 and produces display and audio messages (welcome screen) such as "can I help you?" before displaying a screen for the customer to choose a transaction item (step 1301). When the customer 205 selects a withdrawal, the ATM 101 displays "Please insert card." When an IC card 201 is inserted into the card handling mechanism 105 (step 1302), the magnetic stripe read/write unit 111 reads account information recorded in the magnetic stripe. At the timing that the IC card 201 is detected to be inserted into the card handling mechanism 105, the face capturing camera 118 takes a picture of the face of the customer 205 (step 1303).

The ATM 101 shows a guidance screen on the display 103 prompting the user to put his registered finger 701 on the finger vein reader 102 (step 1304). When the customer 205 puts his finger 701 on the finger vein reader 102 as instructed, the finger vein reader 102 reads a finger vein image 702 of the finger 701 (step 1305). Based on the finger vein image 702 thus read, the finger vein reader 102 performs a quality evaluation quantitatively on the finger vein image 702 for evaluation items, such as stability of the finger vein image 702, fuzziness/sharpness in an entire image area and thickness/continuity of veins. Evaluation results are either given an OK or NG decision (step 1306).

The ATM 101 checks the quality evaluation result (step 1307) and, if the quality evaluation result is NG, executes image processing to improve the quality of the scanned finger vein image 702 which is not performed during the registration process (step 1308).

A check is made as to whether the quality of the finger vein image 702 is improved (step 1309). If the quality is found improved, the processing returns to step 1306 where it performs the quality evaluation again on the finger vein image 702. If the quality is found not improved, the way the finger 701 is placed is determined as constituting a rudimentary NG (failure) cause. For example, in each of the cases (1) the finger 701 is not static, (2) either the tip or base of the finger is out of contact with (floating from) the finger vein reader 102 or (3) the finger 701 is pressed so hard that the veins are constricted, a pertinent guidance for improving the way the finger 701 is placed is displayed (step 1310).

Then, the recorded data, such as the number of reading retries and the number of NG occurrences for each NG cause category, is incremented by 1 (step 1311) and a check is made as to whether the number of reading retries has reached the predetermined number (in this example, 5th time) (step 1312). If the fifth time is not reached, the processing returns to step 1304 where it displays a guidance prompting the customer 205 to put his finger again. If step 1312 finds that the number of retries has reached fifth time, the processing displays a message reading "biometric authentication failed" (authentication NG) (step 1313), returning the IC card 201 to the customer 205 (step 1314) before terminating the transaction.

As to the quality evaluation of the image of this figure and the quality improvement processing (step 1306-1310), the order and combination of image quality improvement operations may preferably be arranged in consideration of relations with other operations and of purposes. It is of course possible to adopt the order and combination shown in Figs. 8A and 8B.

If the quality evaluation result in step 1307 is found to be OK, characteristic quantities are extracted from the scanned finger vein image 702 (step 1315) and authentication data is prepared from the extracted characteristic quantities, sent to the IC chip 301 and checked by the biometric AP 403 against the overall area data of Fig. 10A stored in the registration data area 405 of the IC chip 301 (step 1316).

The ATM 101 confirms if the check result is an authentication OK or NG (step 1317). If the authentication is NG, then a matching level between patterns of the authentication data and the registration data is examined to determine whether the finger that is registered in the IC chip is being scanned by the finger vein reader (step 1318). If the patterns of the finger vein image 702 do not match, a message is displayed reading "vein patterns do not match, so biometric authentication failed" (authentication NG) (step 1319), returning the IC card 201 to the customer 205 (step 1320) before terminating the transactions.

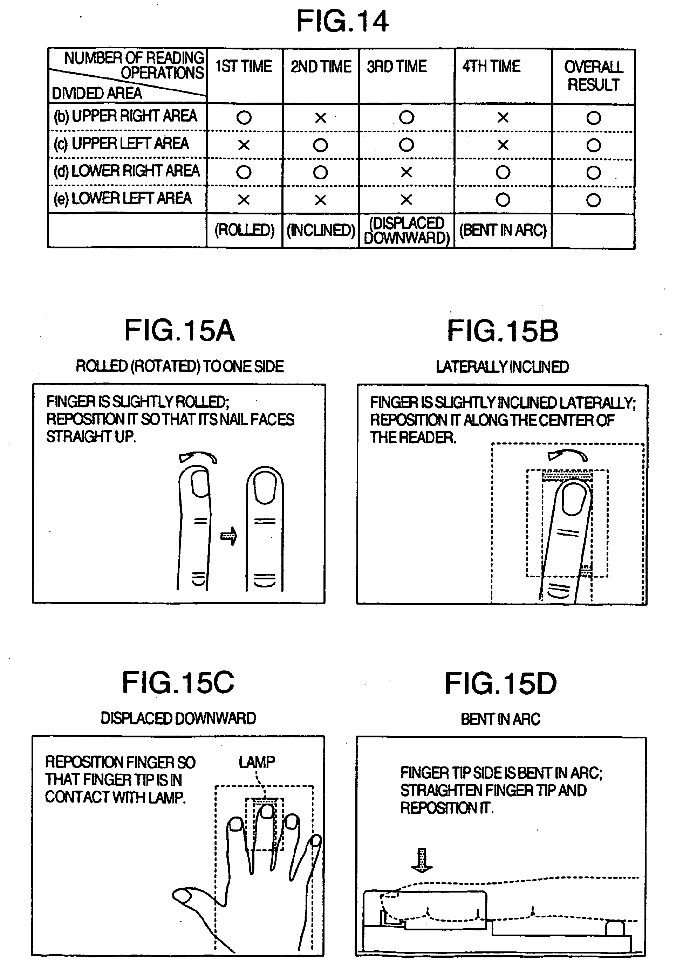

If the patterns of the finger vein image 702 match, then a check is made against the upper right area data of Fig. 10B, the upper left area data of Fig. 10C, the lower right area data of Fig. 10D and the lower left area data of Fig. 10E successively. Then, the check results are recorded in an overall management table of Fig. 14, i.e., in a first reading column for each of the divided areas (step 1321).

In Fig. 14, symbol "O" represents a matching OK and symbol "X" represents a matching NG. Each time the reading is retried, a check result is recorded in each area in a corresponding retry number column. When the matching OK is obtained at least once in any of the divided areas of Fig. 10B to 10E, the overall result is determined to be an authentication OK.

For example, in the first reading, the divided sub-areas of Fig. 10C and Fig. 10E have a matching NG. Thus, the overall result in the first reading is that the divided sub-areas of Fig. 10C and Fig. 10E have a matching NG. In a second reading, the divided sub-areas of Fig. 10B and Fig. 10E have a matching NG (step 1322). Thus, the overall result up to the second reading is that the sub-divided area of Fig. 10E has a matching NG. In a third reading, the divided sub-areas of Fig. 10D and Fig. 10E have a matching NG. Thus, the overall result up to the third reading is that the sub-divided area of Fig. 10E has a matching NG. In the example of Fig. 14, the lower left divided sub-area of Fig. 10E, which has been NG from the first to third reading, is given OK in the fourth reading. Since all divided sub-areas of Fig. 10B to Fig. 10E have a matching OK at least once, an authentication OK decision is given as an overall result (step 1322-1323). Another authentication method using divided areas may involve dividing the area into a greater number of sub-areas, counting up the matching results for all sub-areas, and giving an authentication OK or NG as an overall result according to a ratio of the number of sub-areas with a matching OK to the total sub-area number. Still another authentication method may give every sub-area its own weighting value and then make an authentication OK or NG as an overall result according to the total of the weighting values of those sub-areas with a matching OK.

For each divided sub-area the overall result is checked (step 1323). If an authentication NG is found, the matching result of each sub-area is checked and possible NG causes are analyzed to display a pertinent guidance for improving the way the finger 701 is placed (step 1324).

For example, in Fig. 14, in the first reading the upper left area of Fig. 10C and the lower left area of Fig. 10E, which together form the left side, are NG. This is caused by the finger 701 slightly rolled toward right. So, as shown in Fig. 15A, a guidance is displayed to prompt the user to reposition his finger so that its nail faces straight above. In the second reading in Fig. 14, the upper right area of Fig. 10B and the lower left area of Fig. 10E, which are diagonally arranged, are NG. This is caused by the finger 701 placed inclined slightly toward right. So, as shown in Fig. 15B, a guidance is displayed prompting the user to reposition his finger 701 so that it is straight along the center of the reader. In the third reading in Fig. 14, the lower right area of Fig. 10D and the lower left area of Fig. 10E, which together form the lower side, are NG. This is caused by the finger 701 slightly displaced downwardly. So, as shown in Fig. 15C, a guidance is displayed prompting the user to reposition his finger so that the finger tip is in contact with a lamp of the finger vein reader 102. In the fourth reading in Fig. 14, the upper right area of Fig. 10B and the upper left area of Fig. 10C, which together form the upper side, are NG. This is caused by the finger 701 whose tip portion is bent in arc. So, as shown in Fig. 15D, a guidance is displayed prompting the user to straighten the finger tip and reposition his finger 701.

Although the examples shown in this application have both the registration data and the authentication data divided, it is also possible to divide only the authentication data and successively check the divided data for matching.

When an authentication OK is obtained in step 1317 or step 1323, the ATM 101 reads account information recorded in the magnetic stripe of the IC card 201 by the magnetic stripe read/write unit 111 (step 1325), displays a password input screen on the display 103 for the customer 205 to enter his/her password (step 1326). Next, a guidance is displayed to prompt the customer 205 to enter an amount of withdrawal (step 1327). The ATM 101 sends the account information of the customer 205 thus read out and the password and withdrawal amount entered to the host computer 207 in the management center, which then checks if the account information of the customer 205 matches the password and if the requested withdrawal amount can be drawn out from the remainder of the account (step 1328). Upon receiving an acknowledgement OK from the host computer 207, the ATM 101 instructs the bank note handling mechanism 106 to dispense the requested amount (step 1329). Next, the ATM 101 instructs the statement slip printing mechanism 107 to output a statement slip. At the same time the ATM 101 instructs the card handling mechanism 105 to return the IC card 201 to the customer 205 (step 1330) before terminating the transaction.

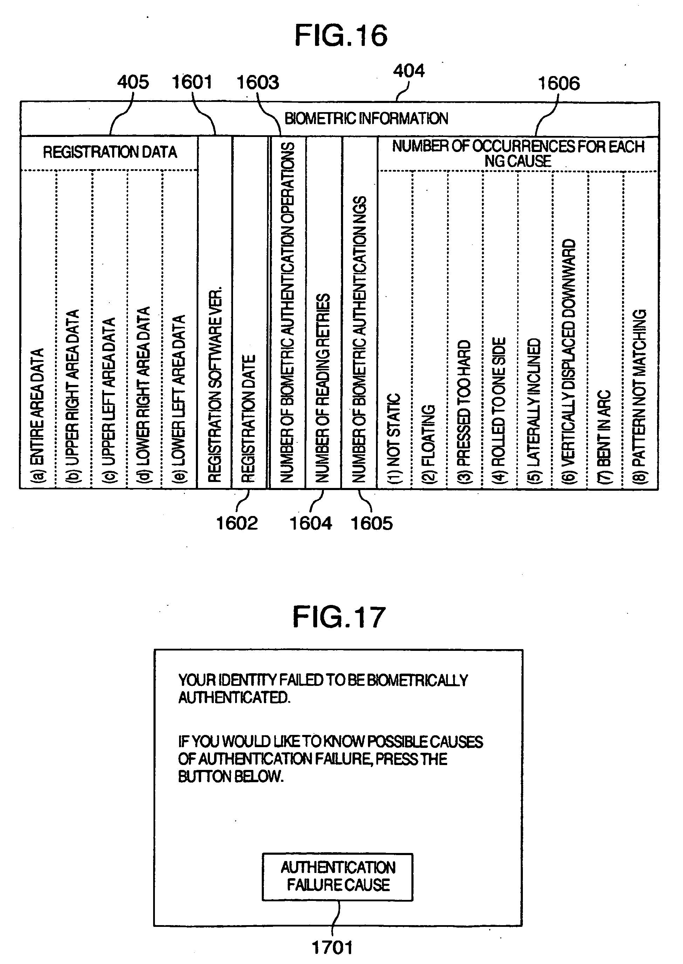

Fig. 16 shows a structure of data stored in the biometric information data area 404 of the IC chip 301. The registration data area 405 has biometric data registered therein for each of the divided sub-areas of Figs. 10A-10E. A registration process software version 1601 records a version of the registration process software used to write the registration data into the registration data area 405. A registration date 1602 records a date that the biometric information was registered. A biometric authentication process number 1603 indicates a total number of times that the biometric authentication process has been executed during the transaction performed in the ATM 101 using an IC card 201. A reading retry number 1604 indicates the total number of times that the reading has been retried. An authentication NG number 1605 indicates the total number of times that the biometric authentication has resulted in an authentication NG. An NG cause occurrence number 1606 indicates the total number of times that each of eight NG causes has occurred - (1) finger fails to be static, (2) finger floats, (3) finger is pressed too hard, (4) finger is rolled (inclined) (5) finger is inclined (toward left or right), (6) finger is displaced downward (in vertical direction), (7) finger is bent in arc and (8) vein pattern fails to match.

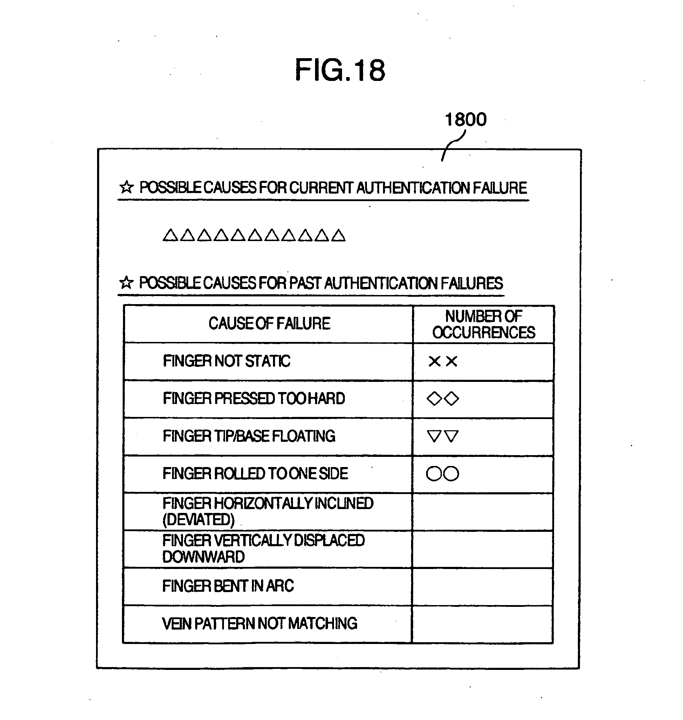

When in Figs. 13A and 13B a biometric authentication failure (authentication NG) is displayed in step 1313 and step 1319, a button 1701 to show the cause of authentication failure is provided in the displayed screen, as shown in Fig. 17. When a customer presses the button 1701, an authentication failure cause screen 1800 of Fig. 18 is displayed. The authentication failure cause screen 1800 shows possible causes of the current authentication failure as "current authentication failure causes." As to past authentication failure causes, the NG cause occurrence number 1606 for each NG cause is read from the IC chip 301 and displayed as "past authentication failure causes." From this screen, the customer 205 can check possible errors leading to the authentication NGs that he or she is apt to make in reading the biometric information during the biometric authentication process and thus can himself properly improve the manner in which the finger 701 is placed.

If an authentication NG occurs more than a predetermined number of times for the same customer 205, though not shown in Figs. 13A and 13B, the ATM 101 may execute a staff calling procedure in which, under the witness of a staff, the customer 205 is allowed to check the current authentication failure causes and the NG cause occurrence number 1606 for each cause and in which the staff shows to the customer 205 how to correctly put a finger on the reader, thus supporting the biometric authentication process.

Although this embodiment has been described in detail referring to drawings as to the processing performed by the finger vein authentication device incorporated in the ATM 101, it is noted that the biometric information is not limited to finger veins and may be otherwise, such as veins in palm of hand, finger prints, irises and face image. Further, although biometric information has been explained to be registered with the IC chip 301 mounted on the IC card 201, the similar processing may also be realized by registering biometric information with a portable terminal, such as a cell phone, making arrangements such that the IC chip read/write unit 112 of the ATM 101 can cope with devices of not only a contact type but also a non-contact type, and wirelessly reading the biometric information registered in the cell phone. This also applies to a case where biometric information is registered with a server of a financial institution. Further, while this embodiment has described instructions to be issued from the ATM 101 to a customer 205 by means of a display 103 of the ATM 101 and a voice guidance, it is also possible to mount a liquid crystal display on the biometric information registration device or biometric information authentication device itself to issue instructions to the customer 205. Therefore, the present invention is not limited to ATMs 101 but is applicable to automated equipment in general including biometric information registration devices and biometric information authentication devices. In that case, the automated equipment can constitute a similar biometric authentication system not only for biometric information of a customer 205 using the automated equipment but also for biometric information of an operator (user) of the automated equipment.

With this embodiment, an authentication success rate can be improved by improving the quality of a biometric information image read during the authentication process. Further, in the event of an authentication failure, a customer can become aware of errors he is apt to make in putting his finger on the reader and thus can improve on the finger placement when performing the registration and authentication of biometric information. The customer therefore can deepen the knowledge of how to improve the reading of biometric information and the image quality so that each time an identity verification is performed at the start of transaction, the quality of a scanned image can be improved. This in turn enhances reliability of automated transaction equipment including biometric authentication device or equipment having biometric authentication function, thus securing stable operation of the equipment.

## Claims

1. A biometric authentication system comprising:
a reader (102) for reading biometric information;
a registration unit (301) for registering the biometric information thus read; and
a main control unit (110) to perform a registration operation for registering with the registration unit (301) in advance the biometric information read by the reader (102), and an authentication operation for authenticating the biometric information read by the reader (102) during an authentication process,
**characterised in that** the main control unit (110) is adapted
to perform, if the quality of the biometric information image read during the authentication process fails to meet a qualitative evaluation, a quality improvement operation on the biometric information image read during the authentication process which includes at least one of the following sequential operations:
emphasising the contrast of the image if the clearest image selected from a plurality of images read is at or below a predetermined clarity level;
lowering a threshold for image density change processing when imaged veins in the image read are narrow;
eliminating noise when veins in the image read are interrupted, and
to execute a matching operation after checking that the predetermined image quality has been obtained by the quality improvement operation.

## Patentansprüche

1. Biometrisches Authentifizierungssystem mit:
einem Lesegerät (102) zum Auslesen biometrischer Informationen,
einer Speichereinheit (301) zum Speichern der so ausgelesenen biometrischen Informationen, und
einer Hauptsteuereinheit (110) zum Ausführen einer Speicheroperation zur Vorabspeicherung der von dem Lesegerät (102) ausgelesenen biometrischen Informationen in der Speichereinheit (301) und einer Authentifizieroperation zum Authentifizieren der während eines Authentifiziervorgangs von dem Lesegerät (102) ausgelesenen biometrischen Informationen,
**dadurch gekennzeichnet, dass** die Hauptsteuereinheit (110) so ausgelegt ist, dass sie
dann, wenn die Qualität des während des Authentifiziervorgangs ausgelesenen biometrischen Informationsbildes eine qualitative Bewertung nicht erfüllt, an dem während des Authentifiziervorgangs ausgelesenen biometrischen Informationsbild eine Qualitätsverbesserungsoperation durchführt, das mindestes eine der folgenden sequentiellen Operationen umfasst:
Erhöhen des Bildkontrasts, wenn das aus mehreren ausgelesenen Bildern ausgewählte klarste Bild bei oder unter einem vorgegebenen Klarheitspegel liegt,
Erniedrigen eines Schwellenwertes für eine Bilddichte-Änderung, wenn abgebildete Venen in dem ausgelesenen Bild schmal sind,
Rauschunterdrückung, wenn Venen in dem ausgelesenen Bild unterbrochen sind, und
Ausführen eines Anpassungsvorgangs nach Feststellung, dass die vorgegebene Bildqualität durch die Qualitätsverbesserungsoperation erzielt worden ist.

## Revendications

1. Système d'authentification biométrique comportant :
un lecteur (102) pour lire des informations biométriques,
une unité d'enregistrement (301) pour enregistrer les informations biométriques ainsi lues, et
une unité de commande principale (110) pour exécuter une opération d'enregistrement afin d'enregistrer à l'avance à l'aide de l'unité d'enregistrement (301) les informations biométriques lues par le lecteur (102), et une opération d'authentification pour authentifier les informations biométriques lues par le lecteur (102) pendant un processus d'authentification,
**caractérisé en ce que** l'unité de commande principale (110) est adaptée
pour exécuter, si la qualité de l'image d'informations biométriques lue pendant le processus d'authentification ne parvient pas à satisfaire à une évaluation qualitative, une opération d'amélioration de qualité sur l'image d'informations biométriques lue pendant le processus d'authentification qui inclut au moins l'une des opérations successives suivantes consistant à :
accentuer le contraste de l'image si l'image la plus claire sélectionnée à partir d'une pluralité d'images lues est à un niveau de clarté prédéterminé ou au-dessous de celui-ci,
réduire un seuil pour un traitement de changement de densité d'image lorsque des veines imagées dans l'image lue sont serrées,
éliminer du bruit lorsque des veines dans l'image lue sont interrompues, et
pour exécuter une opération de mise en correspondance après avoir contrôlé que la qualité d'image prédéterminée a été obtenue par l'opération d'amélioration de qualité.
